**Europäisches Patentamt**

**European Patent Office**

**Office européen des brevets**

(19)

(11) Veröffentlichungsnummer : **0 121 212 B1**

# EUROPÄISCHE PATENTSCHRIFT

(12)

(45) Veröffentlichungstag der Patentschrift :
25.05.88

(21) Anmeldenummer : 84103331.9

(22) Anmeldetag : 27.03.84

(51) Int. Cl.⁴ : **B 24 B 17/00, B 24 B 47/20, B 24 B 49/00**

(54) Verfahren zum Überwachen des Betriebsverhaltens von Projektions-Formen-Schleifmaschinen.

(30) Priorität : 31.03.83 DE 3311861

(43) Veröffentlichungstag der Anmeldung :
10.10.84 Patentblatt 84/41

(45) Bekanntmachung des Hinweises auf die Patenterteilung : 25.05.88 Patentblatt 88/21

(84) Benannte Vertragsstaaten :
AT BE CH DE FR GB IT LI LU NL SE

(56) Entgegenhaltungen :
EP-A- 0 074 518
CH-A-   438 999
DE-A- 2 314 602
DE-A- 2 537 630
DE-B- 1 080 432
FR-A- 2 176 421

(73) Patentinhaber : Werkzeugmaschinenbau Präzisions-Technik GmbH Wertheim
Carl-Jacob-Kolb-Weg
D-6980 Wertheim (DE)

(72) Erfinder : Kolb, Alfred, Dipl.-Ing.
Haus am Tannenberg
D-6980 Wertheim (DE)
Erfinder : Eckstein, Friedrich, Prof. Dr.-Ing.
Jahnstrasse 6
D-6101 Fränkisch-Crumbach (DE)
Erfinder : Dietrich, Edgar, Dr.-Ing.
Balzenbacherstrasse 59
D-6943 Birkenau (DE)

(74) Vertreter : Katscher, Helmut, Dipl.-Ing.
Bismarckstrasse 29
D-6100 Darmstadt (DE)

**Beschreibung**

Die Erfindung betrifft ein Verfahren zum Überwachen des Betriebsverhaltens von numerisch gesteuerten Projektions-Formen-Schleifmaschinen, die eine drehangetriebene Schleifspindel und eine Steuerungseinrichtung für den Schleifspindelantrieb, für den Vorschub- und Zustellantrieb und/oder für einen automatisch ausführbaren Abrichtvorgang aufweisen.

Bei Projektions-Formen-Schleifmaschinen erscheinen die Konturen des zu bearbeitenden Werkstücks und der Schleifscheibe auf einem Projektionsschirm. Bei einer Bedienung der Maschine von Hand wird die Kontur der Schleifscheibe entlang einer auf dem Projektionsschirm vorgegebenen Linie geführt, die der gewünschten Werkstückkontur entspricht. Die Überwachung des Betriebsverhaltens geschieht durch die Bedienungsperson. Eine Sofortabschaltung bei Unterschreiten einer unteren Drehzahlgrenze ist möglich ; wegen der Reaktionszeit der Bedienungsperson ist jedoch kein vollständiger Schutz gewährleistet. Bei numerisch gesteuerten Projektions-Formen-Schleifmaschinen ist eine solche ständige optische Nachführung der Schleifscheibenkonturen entlang der auf dem Projektionsschirm vorgegebenen Linie nicht erforderlich. Die Bewegung des die Schleifspindel mit der Schleifscheibe aufnehmenden Werkzeugschlittens wird hierbei durch die numerische Steuerung, insbesondere eine CNC-Steuerung gesteuert. Damit ergibt sich die Möglichkeit, daß eine einzige Bedienungsperson mehrere derartige Maschinen bedient, wobei der Bearbeitungsvorgang über kürzere oder sogar längere Zeitabschnitte ohne Beaufsichtigung durch die Bedienungsperson erfolgt. Damit entfällt jedoch auch die Möglichkeit zu einer ständigen laufenden Überwachung des Betriebsverhaltens durch die Bedienungsperson, soweit dies unter Berücksichtigung der Reaktionszeit überhaupt möglich wäre. Auftretende Störungen, die ihre Ursache im Bereich des Bearbeitungseingriffs zwischen Schleifscheibe und Werkstück haben, beispielsweise ein Zusetzen der Schleifscheibe oder ein zu starker Werkstoffabtrag infolge von Maßabweichungen des rohen Werkstücks, Steuerungsfehler, Maschinenfehler oder Bedienungsfehler werden hierbei oftmals nicht rechtzeitig erfasst, was zu Beschädigungen der Schleifscheibe, des Werkstücks oder sogar der Maschine und zu einer Gefährdung von Personen führen kann.

Es ist zwar bekannt (DE-A 31 18 065), bei Schleifmaschinen das mit einem besonders hohen Gefahrenrisiko verbundene Auffahren der Schleifscheibe mit zu hoher Vorschubgeschwindigkeit auf das Werkstück dadurch auszuschließen, daß eine Steuerung aus dem Vergleich mehrerer Daten einen Befehl zum Abschalten des Zustellvorgangs herleitet, wenn eine Auffahrgefahr besteht. Soweit es sich hierbei um Daten handelt, die die Geometrie der Schleifscheibe und des Werkstücks nicht nur im Sollzustand, sondern im Istzustand wiedergeben, sind zur Erfassung aufwendige und störanfällige Sensoren erforderlich, beispielsweise Lasersensoren. Dieses bekannte Verfahren ist jedoch nicht dazu geeignet oder bestimmt, Betriebsstörungen zu erfassen, die sich während des Bearbeitungsvorgangs einstellen und beispielsweise durch ein allmähliches Zusetzen der Schleifscheibe bedingt sind.

Daneben sind bei Maschinen allgemein Überlastsicherungen bekannt, die eine Sofortabschaltung des Antriebs bewirken, sobald ein Belastungs-Grenzwert überschritten wurde. Derartige Überlastsicherungen können jedoch erst wirksam werden, wenn eine verhältnismäßig hohe Belastungsstufe erreicht ist ; wenn im Laufe eines Bearbeitungsvorganges einer Schleifscheibe üblicherweise unterschiedliche Belastungsstufen auftreten, kann die bekannte Überlastsicherung nur nach der jeweils höchsten Belastungsstufe ausgelegt werden, so daß eine sich im Bereich einer niedrigeren Belastungsstufe anbahnende Störung nicht oder nicht rechtzeitig erfasst wird, um Schäden zu verhindern. Außerdem steht bei diesem bekannten Verfahren als mögliche Maßnahme nur die Sofortabschaltung zur Verfügung, so daß eine Arbeitsunterbrechung auftritt, bis die Bedienungsperson Kenntnis erhält und Abhilfemaßnahmen einleitet. Schon aus diesem Grund sind die bekannten Überlastsicherungen für eine laufende Überwachung des Betriebsverhaltens von Projektions-Formen-Schleifmaschinen nur sehr begrenzt geeignet.

Eine Projektions-Formen-Schleifmaschine mit den im Oberbegriff des Patentanspruchs 1 genannten Merkmalen ist aus EP-A-74 518 bekannt. Dort wird die Schleifscheibe mit einem Profilkörper abgerichtet ; eine Drehzahlüberwachung erfolgt nicht.

In der DE-A-2 537 630 (Anspruch 12) wird eine Drehzahländerung der Werkstückspindel erwähnt, jedoch nur in dem Zusammenhang, daß diese Drehzahl in Abhängigkeit von anderen Parametern geändert wird. Die Erfassung dieser verschiedenen Betriebsparameter und deren Auswertung mit dem Ziel der Drehzahlveränderung erfordert einen erheblichen Steuerungsaufwand. Diese bekannte Maßnahme dient nicht zur Überwachung des Betriebsverhaltens der Schleifmaschine, sondern nur dazu, die Spindeldrehzahl so zu regeln, daß ein Feinschleifvorgang in optimaler Weise durchgeführt werden kann.

Aufgabe der Erfindung ist es, ein Verfahren der eingangs genannten Gattung zu schaffen, das es ermöglicht, in einfacher Weise und insbesondere ohne die Notwendigkeit aufwendiger Sensoren das Betriebsverhalten von Projektions-Formen-Schleifmaschinen laufend zu überwachen und sich anbahnende Störungen so rechtzeitig und in solcher Weise zu erkennen, daß eine für den jeweiligen Fall angemessene Abhilfemaßnahme ergriffen werden kann.

Diese Aufgabe wird erfindungsgemäß dadurch gelöst, daß die Schleifspindel-Drehzahl erfaßt und ihre Drehzahländerung gegenüber einem Drehzahl-Sollverhalten ermittelt wird, daß ausgehend davon bei steilem Drehzahlabfall eine Sofortabschaltung des Schleifspindelantriebs erfolgt, daß bei schwachem, langanhaltendem Drehzahlanstieg ein Abrichtvorgang der Schleifscheibe eingeleitet wird und daß bei dazwischen liegendem Drehzahlabfall die Vorschubgeschwindigkeit verringert wird.

Der zeitliche Verlauf der Drehzahländerung läßt einen Schluß zu, um welche Art einer Störung es sich handelt, so daß automatisch diejenige von mehreren unterschiedlichen möglichen Steuerungsmaßnahmen an der Schleifmaschine ergriffen werden kann, die dieser Störung entgegenwirkt und die insbesondere nicht in jedem Fall eine Sofortabschaltung und damit vollständige Unterbrechung des Bearbeitungsvorgangs nach sich zieht.

Das erfindungsgemäße Verfahren geht von der Erkenntnis aus, daß der in meßtechnisch sehr einfacher Weise und insbesondere ohne zusätzliche Sensoren feststellbare zeitliche Verlauf der Drehzahländerung eine aussagekräftige Information liefert, die zwar nicht in jedem Fall eine genaue Fehleranalyse ermöglicht, mindestens jedoch die Zuordnung der auftretenden Störung zu unterschiedlichen Gruppen von Störungsursachen, so daß auf diese Störung differenziert reagiert werden kann.

Da nicht von festen Drehzahl-Toleranzgrenzen ausgegangen wird, sondern von einem dem jeweiligen Bearbeitungsvorgang angepaßten Drehzahl-Sollverlauf, werden auftretende Störungen oder Veränderungen auch in solchen Bereichen erfaßt, in denen durch den vorgegebenen Bearbeitungsverlauf beispielsweise ohnehin eine verhältnismäßig niedrigere Drehzahl der Schleifscheibe vorliegt.

Je nach der Steilheit des Drehzahlabfalls wird unterschiedlich reagiert. Ein steiler Drehzahlabfall signalisiert eine hohe Überlastung der Schleifscheibe und eine Gefährdung der Schleifscheibe oder des Werkstücks, so daß in diesem Fall die Sofortabschaltung die angemessene Maßnahme ist. Erfolgt der Drehzahlabfall langsamer, so kann in den meisten Fällen schon die vorgesehene Verringerung des Vorschubs dahingehend Abhilfe schaffen, daß sich wieder eine im Sollbereich liegende Schleifscheibendrehzahl einstellt. Erfolgt der Drehzahlabfall noch langsamer oder erfolgt ein langsamer Drehzahlanstieg, so kann angenommen werden, daß sich die Schleifscheibe zugesetzt hat, so daß ein Abrichtvorgang Abhilfe schafft.

Es ist zwar bekannt (DE-A-30 29 962), bei einer Werkzeugmaschine neben anderen Größen die Drehzahl der Werkzeugspindel zu erfassen, um die Betriebsweise in Abhängigkeit vom Drehmoment zu beeinflussen. Hierbei erfolgt jedoch eine aufwendige Auswertung der erfaßten Größen.

Bekannt ist auch (US-A-39 65 622), aus einer Spindeldrehzahländerung, die sich bei einer Schleifmaschine bei der Berührung mit dem Werkstück ergibt, eine Steuerungsmaßnahme herzuleiten, nämlich eine Änderung der Zustellgeschwindigkeit. Hierbei wird jedoch nur für einen sehr speziellen Betriebszustand, nämlich die Berührung mit dem Werkstück, zwangsläufig nur eine einzige mögliche Steuerungsmaßnahme ergriffen.

Die Erfassung des zeitlichen Verlaufs der Drehzahländerung kann in unterschiedlicher Weise erfolgen.

So ist gemäß einer Ausführungsform des Erfindungsgedankens vorgesehen, daß unterhalb bzw. oberhalb eines vorgegebenen Betriebsdrehzahlbereichs mehrere Drehzahl-Toleranzgrenzen festgelegt werden, daß in regelmäßiger Folge einzelne Drehzahlmessungen durchgeführt werden, und daß die jeweilige Anzahl der Überschreitungen bzw. Unterschreitungen der einzelnen Drehzahl-Toleranzgrenzen erfaßt wird. Beim Rundschleifen erfolgen die Messungen innerhalb vorgegebener Zeiteinheiten, beim Flachschleifen innerhalb eines Hubes. Betrachtet wird hierin die Änderung des aufgetretenen Minimums.

Diese ermittelte Anzahl der Überschreitungen bzw. Unterschreitungen der einzelnen Drehzahl-Toleranzgrenzen und ihr zeitlicher Verlauf liefert in sehr einfacher Weise ein steuerungstechnisch unmittelbar auswertbares Signal, das eine direkte Information über den zeitlichen Verlauf der Drehzahländerung ergibt. Werden beispielsweise kurz hintereinander mehrere Drehzahl-Toleranzgrenzen unterschritten, so entspricht dies einem sehr steilen Drehzahlabfall, der im allgemeinen eine Sofortabschaltung erfordert. Wird dagegen nur die dem Sollverlauf nächstliegende Toleranzgrenze unter- bzw. überschritten, gegebenenfalls auch häufiger, nicht oder sehr viel seltener dagegen die nächste Toleranzgrenze, dann entspricht dies einem flachen Verlauf der Drehzahländerung.

Die Festlegung des Drehzahl-Sollverlaufs kann entweder aus theoretischen Überlegungen ausgehend von der Werkstückkontur erfolgen oder zweckmäßigerweise bei der Bearbeitung eines ersten von mehreren gleichartigen Werkstücken. Unter Berücksichtigung der Besonderheiten des Bearbeitungsvorganges gibt die Bearbeitung des ersten Werkstücks, die unter Aufsicht der Bedienungsperson erfolgt, das Drehzahl-Sollverhalten vor, gegenüber dem dann die auftretenden Drehzahländerungen festgestellt bzw. die mehreren Toleranzgrenzen festgelegt werden. Noch bedeutsamer ist das Fertigungsergebnis. Ist dieses in Ordnung, so wird das ermittelte Drehzahl-Istverhalten zum Sollverhalten erklärt.

Als besonders vorteilhaft hat es sich erwiesen, die Drehzahlerfassung unmittelbar an der Schleifspindel durchzuführen, weil dadurch das Meßergebnis verfälschende Einflüsse, beispielsweise durch zwischengeschaltete Antriebselemente, wie Riementriebe, ausgeschlossen sind.

Die Erfindung wird nachfolgend an einem Ausführungsbeispiel näher erläutert, das in der Zeichnung dargestellt ist.

Es zeigt :

Fig. 1 in vereinfachter Darstellungsweise Teile einer Projektions-Formen-Schleifmaschine mit einer Meßeinrichtung zur Erfassung des Drehzahlverlaufs,

Fig. 2 ein Blockschaltbild einer Steuerung zur Durchführung des erfindungsgemäßen Verfahrens bei einer Projektions-Formen-Schleifmaschine und

Fig. 3 ein Diagramm des Verlaufs der Drehzahlminima mit Toleranzgrenzen bei der Bearbeitung eines Werkstücks auf einer Projektions-Formen-Schleifmaschine.

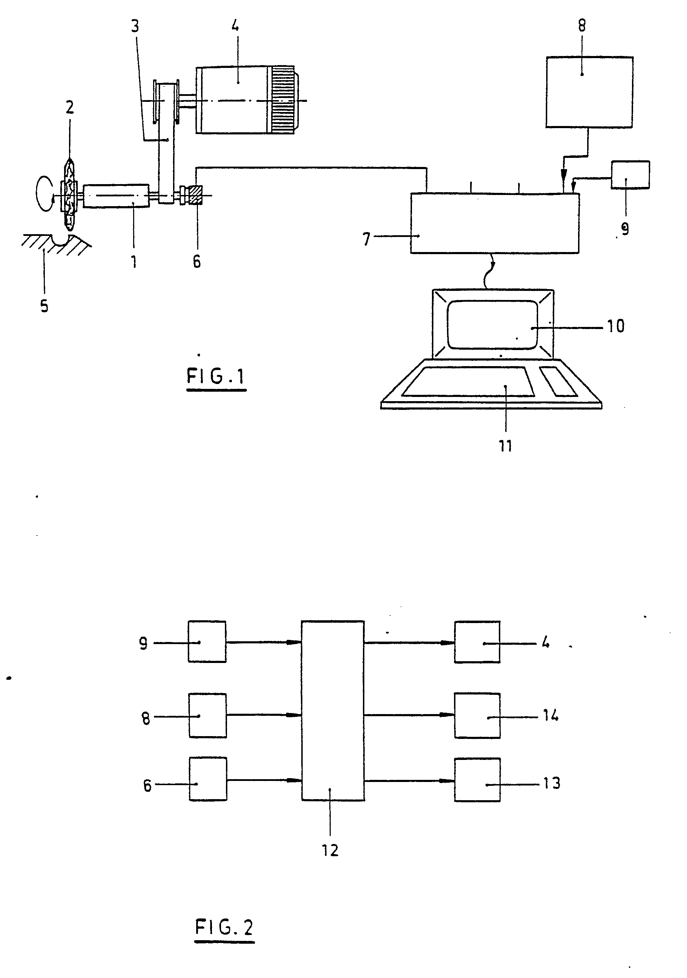

Fig. 1 zeigt eine Schleifspindel 1 einer Projektions-Formen-Schleifmaschine. Die Schleifspindel 1 trägt eine Schleifscheibe 2 und wird über einen Riementrieb 3 von einem Spindelantriebsmotor 4 angetrieben. Die Spindeldrehzahl wird für einen Schleifvorgang in Abhängigkeit vom Schleifscheibendurchmesser fest eingestellt. Unterhalb der Schleifscheibe 2 ist die Kontur eines zu bearbeitenden Werkstücks 5 dargestellt. Ein (nicht gezeigter) Schleifkopf bewegt sich entlang dem Werkstück 5. Der Spindelantriebsmotor 4 ist am Werkzeugschlitten angebracht; die Schleifspindel 1 führt beim Flachschleifen im Schleifkopf regelmäßige Hübe senkrecht zur Zeichenebene aus. Beim Rundschleifen findet keine Hubbewegung statt; das Werkstück wird durch einen (nicht dargestellten) Rundschleifapparat gedreht. Die Steuerung der Werkzeugbewegung relativ zu dem Werkstück 5 erfolgt entweder von Hand, wobei die Konturen der Schleifscheibe 2 des Werkstücks 5 auf einem (nicht dargestellten) Projektionsschirm beobachtet werden, oder durch eine (ebenfalls nicht dargestellte) numerische Steuerung, vorzugsweise eine CNC-Steuerung.

Auf der Schleifspindel 1 befindet sich ein Drehzahlgeber 6, dessen Ausgangssignal einem Kleinrechner 7 zugeführt wird. Der Kleinrechner 7 erhält von einem Impulsgeber 8 Triggerimpulse entsprechend den Hüben der Schleifspindel 1. Beim Rundschleifen werden die Triggerimpulse im Kleinrechner 7 in fest vorgegebenen zeitlichen Abständen intern erzeugt.

Ein Geber 9 gibt bei der ersten Berührung zwischen der Schleifscheibe 2 und dem Werkstück 5 ein Signal an den Kleinrechner 7. Das vom Kleinrechner 7 gelieferte Ergebnis wird auf einem Bildschirm 10 dargestellt und/oder durch einen Drucker 11 bzw. Plotter oder x-y-Schreiber ausgegeben.

Fig. 2 zeigt ein vereinfachtes Blockschaltbild einer Einrichtung zur laufenden Überwachung des Betriebsverhaltens der Projektions-Formen-Schleifmaschine nach Fig. 1. Die vom Drehzahlgeber 6, vom Impulsgeber 8 und vom Geber 9 gelieferten Signale werden in einer Überwachungseinheit 12 in Abhängigkeit von vorgegebenen Toleranzgrenzen verarbeitet.

Die Überwachungseinheit 12 gibt in Abhängigkeit von dem ermittelten zeitlichen Verlauf der Drehzahländerung beispielsweise einen Steuerbefehl für eine Sofortabschaltung an den Spindelantriebsmotor 4 sowie an eine CNC-Steuerung 13 bei steilem Drehzahlabfall. Vor der Sofortabschaltung kann versucht werden, die Antriebe in entgegengesetzter Richtung zu bewegen. Ist der Drehzahlabfall so, daß dies nicht innerhalb eines vorgegebenen Zeitraums durchführbar ist, so erfolgt eine Not-Aus-Schaltung.

Wurde nur ein langsamer Drehzahlabfall oder ein schwacher, langanhaltender Drehzahlanstieg festgestellt, so wird eine Abrichtvorrichtung 14 für die Schleifscheibe 2 eingeschaltet. Hierdurch kann beispielsweise ein mit einer dem Schleifscheibenprofil entsprechenden Profilnut versehener Abrichtkörper in Eingriff mit der Schleifscheibe 2 gebracht werden. Zu jedem Abrichten gehört auch ein erneutes Zustellen.

Bei mittlerem Drehzahlabfall gibt die Überwachungseinheit 12 einen Steuerbefehl an die CNC-Steuerung 13, um die Vorschubgeschwindigkeit der Schleifscheibe 2 entlang dem Werkstück 5 zu verringern.

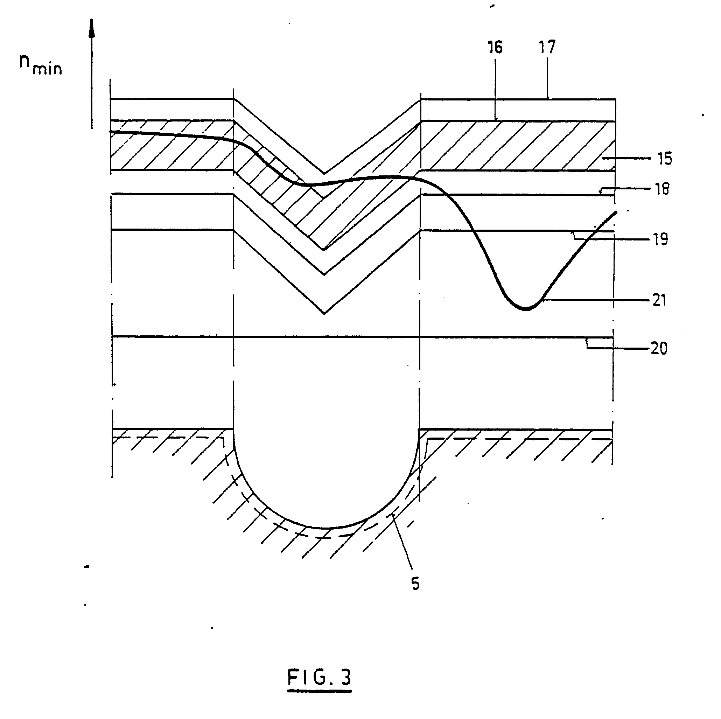

In Fig. 3 ist über der Kontur des zu bearbeitenden Werkstücks 5 der Verlauf der Drehzahlminima $n_{min}$ aufgetragen. Ein schraffierter Bereich 15 gibt das Sollverhalten der Drehzahlminima wieder, das aus theoretischen Überlegungen oder aus der Bearbeitung eines ersten Werkstücks gewonnen wurde. Oberhalb und unterhalb des Drehzahl-Sollbereichs 15 sind mehrere Toleranzgrenzen 16, 17 bzw. 18, 19 und eine Not-Aus-Grenze 20 für die Drehzahlminima aufgetragen. Der Istverlauf 21 der Drehzahlminima überschreitet bzw. unterschreitet während eines Bearbeitungsvorgangs einige der dargestellten Toleranzgrenzen 16, 17, 18, 19. Die Häufigkeit dieser Überschreitungen und ihre zeitliche Folge werden ausgewertet.

Der Toleranzbereich ist durch zulässige Störeinflüsse gekennzeichnet. Die Toleranzgrenzen 16, 17, 18, 19 werden aus Speicherplatzgründen immer als Geradenstücke dargestellt.

**Patentansprüche**

1. Verfahren zum Überwachen und Steuern des Betriebsverhaltens von numerisch gesteuerten Projektions-Formen-Schleifmaschinen, die eine drehangetriebene Schleifspindel und eine Steuerungseinrichtung für den Schleifspindelantrieb für den Vorschub- und Zustellantrieb und/ oder für einen automatisch ausführbaren Abrichtvorgang aufweisen, dadurch gekennzeichnet, daß die Schleifspindel-Drehzahl erfaßt und ihre Drehzahländerung gegenüber einem Drehzahl-Sollverhalten ermittelt wird, daß ausgehend davon bei steilem Drehzahlabfall eine Sofortabschaltung des Schleifspindelantriebs erfolgt, daß bei schwachem, langanhaltendem Drehzahlanstieg oder langsamem Drehzahlabfall ein Abrichtvorgang der Schleifscheibe eingeleitet wird, und daß bei dazwischen liegendem Drehzahlabfall die Vorschubgeschwindigkeit verringert wird.

2. Verfahren nach Anspruch 1, dadurch gekennzeichnet, daß unterhalb bzw. oberhalb eines vorgegebenen Betriebsdrehzahlbereichs mehrere Drehzahl-Toleranzgrenzen festgelegt werden, daß in regelmäßiger Folge einzelne Drehzahlmessungen durchgeführt werden, und daß die jeweilige Anzahl der Überschreitungen bzw. Unterschreitungen der einzelnen Drehzahl-Toleranzgrenzen erfaßt wird.

3. Verfahren nach Anspruch 1, dadurch gekennzeichnet, daß die Festlegung des Drehzahl-Sollverlaufs bei der Bearbeitung eines ersten von mehreren gleichartigen Werkstücken erfolgt.

4. Verfahren nach Anspruch 1, dadurch gekennzeichnet, daß die Drehzahlerfassung unmittelbar an der Schleifspindel erfolgt.

**Claims**

1. Method for monitoring and controlling the service performance of numerically controlled projection form grinding machines which have a rotary-driven grinding spindle and a control device for the grinding spindle drive, for the advance and feed drives and/or for a dressing operation which can be performed automatically, characterised by the fact that the grinding spindle rotation speed is detected, its change in rotation speed is determined in comparison with a required rotation speed performance, that, on the basis of this, in the case of a steep drop in the rotation speed, an instantaneous cut-off of the grinding spindle drive takes place, that in the case of a slight, long-duration rise in the rotation speed or of a gradual fall in the rotation speed, a dressing operation of the grinding wheel is initiated, and that in the case of a fall in the rotation speed in between, the rate of advance is reduced.

2. Method according to Claim 1, characterised by the fact that below or, respectively, above a given range of rotation speeds, several rotation speed tolerance limits are laid down, that individual measurements of rotation speed are carried out in regular sequence, and that the particular number of occasions on which the individual rotation speed tolerance limits are exceeded or not reached is recorded.

3. Method according to Claim 1, characterised by the fact that the establishing of the required progression of the rotation speeds takes place at the time of the machining of the first of several workpieces of the same type.

4. Method according to Claim 1, characterised by the fact that the recording of the rotation speed is carried out directly on the grinding spindle.

**Revendications**

1. Procédé pour la surveillance et la commande du comportement en fonctionnement de meuleuses de moules, à projection optique et à commande numérique, qui comportent une broche porte-meule entraînée en rotation et un dispositif de commande de l'organe d'entraînement de la broche porte-meule, de l'organe d'avancement et de réglage de la profondeur de passe et/ou d'une opération de dressage exécutable automatiquement, caractérisé en ce que la vitesse de rotation de la broche porte-meule est mesurée et sa variation par rapport à une consigne de vitesse de rotation est déterminée, en ce que, en partant de ces données, une mise hors service immédiate de l'organe d'entraînement de la broche porte-meule est effectuée dans le cas d'une chute rapide de la vitesse de rotation, en ce qu'une opération de dressage de la meule est mise en route dans le cas d'une augmentation faible et de longue durée de la vitesse de rotation ou d'une diminution lente de celle-ci et en ce que la vitesse d'avancement est réduite dans le cas d'une diminution de la vitesse de rotation, située entre ces deux limites.

2. Procédé selon la revendication 1 caractérisé en ce qu'on fixe en deça ou au-dessus d'un domaine de vitesse de rotation de fonctionnement plusieurs limites de tolérance de la vitesse de rotation, en ce qu'on effectue selon des séquences régulières diverses mesures de la vitesse de rotation et en ce qu'on saisit le nombre correspondant de dépassement par excès ou par défaut des diverses limites de tolérance de la vitesse de rotation.

3. Procédé selon la revendication 1 caractérisé en ce qu'on détermine l'allure de la consigne de la vitesse de rotation lors de l'usinage d'une première pièce faisant partie d'une série de plusieurs pièces du même genre.

4. Procédé selon la revendication 1 caractérisé en ce qu'on mesure la vitesse de rotation directement sur la broche porte-meule.

FIG.1

FIG.2

1

FIG. 3